# EUROPEAN PATENT SPECIFICATION

(11) **EP 4 428 021 B1**
(45) Date of publication and mention of the grant of the patent: **23.09.2026**
(21) Application number: 23160835.7
(22) Date of filing: 08.03.2023
(51) Int. Cl.: B62J 11/04

(54) **BIKE BOTTLE HOLDER HAVING A FASTENING STRUCTURE**
FAHRRADFLASCHENHALTER MIT BEFESTIGUNGSSTRUKTUR
PORTE-BOUTEILLE POUR VÉLO AYANT UNE STRUCTURE DE FIXATION

(43) Date of publication of application: 11.09.2024
(73) Proprietor: Nuvo Enterprise Co., Ltd., Changhua Hsien (TW)
(72) Inventor: Shih, Ho-Jen, Changhua Hsien (TW); Yang, Hsing-Huan, Changhua Hsien (TW); Shih, Hui-Ching, Changhua Hsien (TW)
(74) Representative: Lang, Christian

(56) References cited:
- CN-B- 110 606 150
- CN-U- 209 617 339
- CN-U- 213 008 489
- CN-U- 216 468 203
- US-A1- 2020 116 299

## Description

### BACKGROUND OF INVENTION

### 1. Field of Invention

The present invention relates to a bike bottle holder having a universal fastening structure.

### 2. Description of the Related Art

A rider loses a lot of fluids during the cycling sport. Therefore, it is extraordinarily important for him to drink water timely. For this purpose, bike bottle holders are made to be mounted on bicycles.

A conventional bike bottle holder comprises a mount and a frame-shaped structure having an opening through which the water bottle is taken out and put in. In use, the bottle is put on the holder through the opening and the neck of the bottle is fastened by the mount. Thus, the bottle can be fixed on the bicycle by means of the bike bottle holder. During the drive, the driver can take out the bottle through the opening and drink water.

The driver may use another water bottle, in case the previous one is lost, old, polluted or damaged, However, the conventional bike bottle holders are generally made for bottles of one single size, type and/or standard and therefore not suitable for bottles of other sizes, types and/or standards. Thus, it may happen that bottles of other sizes, types and/or standards cannot be put on the bike bottle holder or cannot be held steady by the bike bottle holder. The driver has to change the bike bottle holder if he wants to use bottles of other sizes, types and/or standards. This would cause more expenses.

Various holder designs are known in the art. For example, document CN 216 468 203 U shows a conventional water cup holder for bicycles having the features defined in the preamble of claim 1, which can adapt to different installation positions, so that the orientation of the cup is always convenient for the user to take. Document US 2020/0116299 A1 relates to another holder structure, and more specifically to a mounting structure for placing racket.

### SUMMARY OF THE INVENTION

An objective of present invention is to provide a bike bottle holder having a fastening structure so that bottles of different sizes, types and/or standards can be held steady by the bike bottle holder.

To achieve these and other objects of the present invention, a bike bottle holder having a fastening structure according to claim 1 is provided. The bike bottle holder comprises a mount, a holding frame, a spring, a fastening part, and a fitting unit. The mount is provided with a rear plate on which a through fitting hole is arranged. The mount is to be screwed via the fitting hole on a bicycle frame. The rear plate is combined with the holding frame, and an opening is formed on the holding frame. A chamber is arranged in the upper part of the front side of the rear plate. A base is arranged in such a way that it extends from the lower side of the rear plate. A recess is provided on each of both opposite sides of the chamber and formed in such a way that a retaining portion is formed on the front end of the respective recess. Furthermore, a clearance hole is arranged in the centre of the chamber in such a way that it goes backwards through the chamber. The fitting unit is arranged in the clearance hole in such a way that it goes through the clearance hole and thus serves to block the fastening part, enabling a smooth insertion of the fastening part into the chamber. The spring is arranged in the chamber in such a way that an end of the spring abuts on the inner wall area of the chamber. The fastening part has a main body in whose centre a through bore is arranged. A latch is arranged on each of the two opposite sides of the rear end of the main body in such a way that the latch extends from the said respective side. When the main body of the fastening part is put into the chamber in such a way that the other end of the spring abuts on the main body, the two latches will be pushed into the two recesses together. The latches and the retaining portions block each other, avoiding the fastening part from releasing. An abutting piece is arranged on the upper edge of the front end of the main body in such a way that it protrudes from the chamber. An abutting surface is formed on an end of the abutting piece. The said end differs from the end on which the main body is arranged. The fitting unit comprises a bolt and a rear stopper. An end of the bolt is enlarged in such a way that a collar is formed. When the bolt is inserted into the through bore and the clearance hole and combined with the rear stopper on the rear side of the rear plate, the main body of the fastening part will be then blocked by the collar and the rear stopper and thus be absolutely confined in the chamber.

According to the invention, the bike bottle holder is provided with a universal fastening structure which is adjustable according to the size of the bottle or the type and standard of the neck. Thus, the bike bottle holder is suitable for a wider range of usage, which is economic, since it is not necessary to change the bottle holder even though the previous bottle is lost or not usable anymore.

According to the invention, the neck of the bottle can be securely fastened by the abutting piece in combination with the abutting surface. Thus, the bottle holder can be adjusted quickly simply by pressing the fastening part and proves to be user-friendly.

Other objects, advantages, and novel features of invention will become more apparent from the following detailed description when taken in conjunction with the accompanying drawings.

### BRIEF DESCRIPTION OF DRAWINGS

FIG. 1 is a perspective view of a preferred embodiment of an assembled bike bottle holder having a universal fastening structure according to the present invention.
FIG. 2 is an explosive view of a bike bottle holder according to the present invention.
FIG. 3 is a section view of an assembled bike bottle holder according to the present invention.
FIG. 4 is an enlarged figure of a section of an assembled bike bottle holder according to the present invention.
FIG. 5 is a schematic figure showing a water bottle fastened by a bottle holder according to the present invention.
FIG. 6 is an enlarged figure of a section showing a water bottle fastened by a bottle holder according to the present invention.
FIG. 7 shows schematically the adjusting state of a bottle holder according to the present invention.
FIG. 8 is a schematic figure showing another water bottle fastened by a bottle holder according to the present invention.
FIG. 9 is an enlarged figure of a section showing another water bottle fastened by a bottle holder according to the present invention.

### DETAILED DESCRIPTION OF THE PREFERRED EMBODIMENT

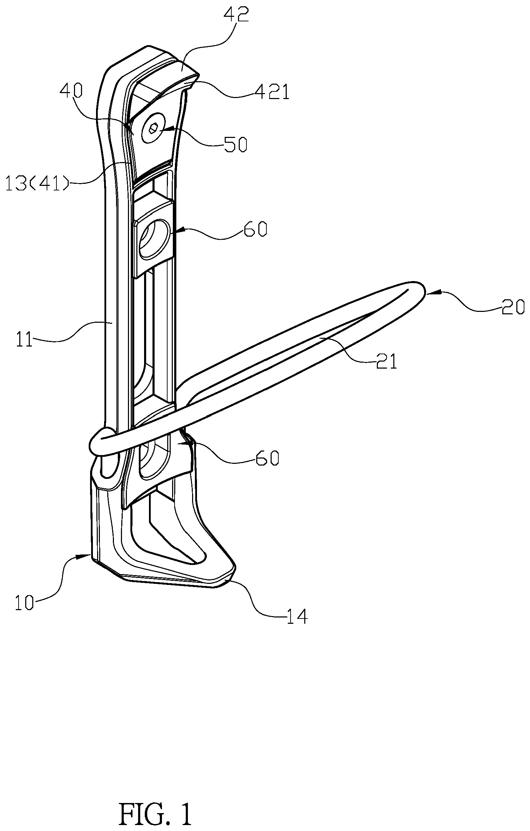

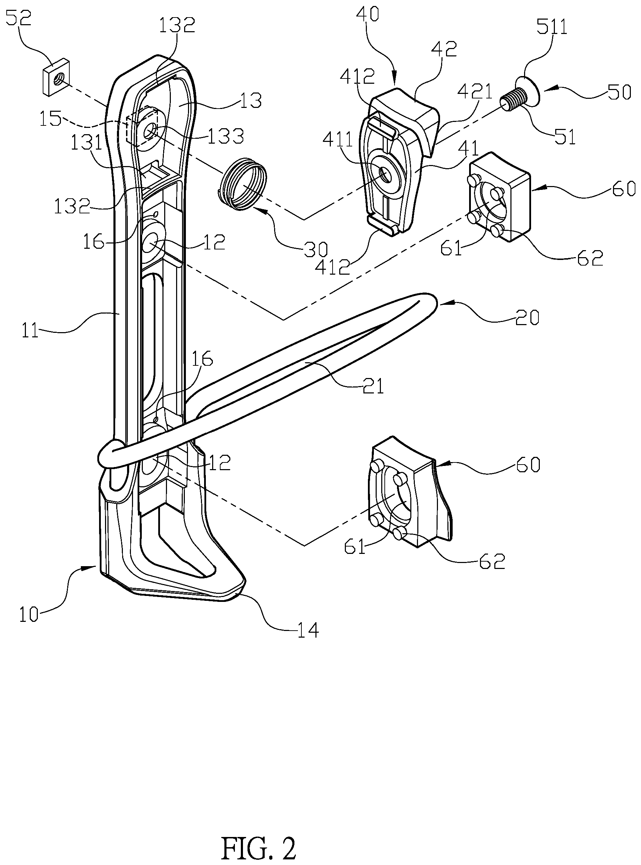

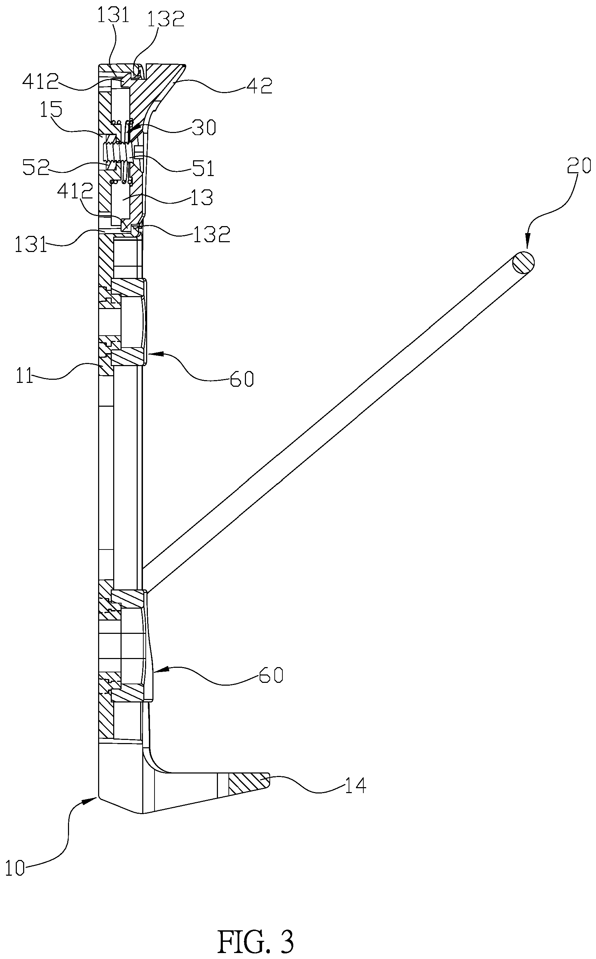

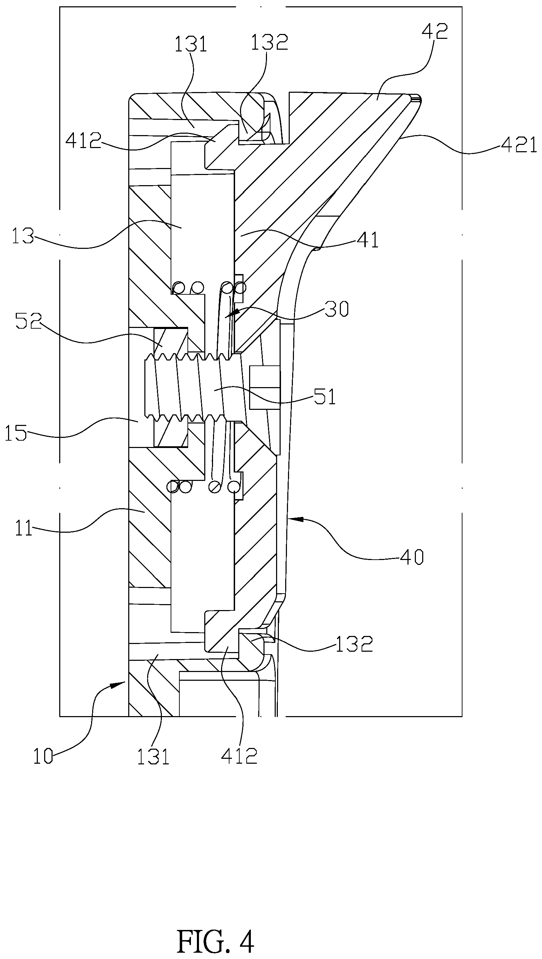

First, please refer to FIG. 1 to FIG. 4, a bike bottle holder having a fastening structure according to the invention comprises a mount 10, a holding frame 20, a spring 30, a fastening part 40, and a fitting unit 50. The mount 10 is provided with a rear plate 11 on which a through fitting hole 12 is arranged. The mount 10 is to be screwed via the fitting hole 12 on a bicycle frame. The rear plate 11 is combined with the holding frame 20, and an opening 21 is formed on the holding frame 20. A chamber 13 is arranged in the upper part of the front side of the rear plate 11. A base 14 is arranged in such a way that it extends from the lower side of the rear plate 11. A recess 131 is provided on each of both opposite sides of the chamber 13 and formed in such a way that a retaining portion 132 is formed on the front end of the respective recess 131. Furthermore, a clearance hole 133 is arranged in the centre of the chamber 13 in such a way that it goes backwards through the chamber 13. The fitting unit 50 is arranged in the clearance hole 133 in such a way that it goes through the clearance hole 133 and thus serves to block the fastening part 40, enabling a smooth insertion of the fastening part 40 into the chamber 13. The spring 30 is arranged in the chamber 13 in such a way that an end of the spring 30 abuts on the inner wall area of the chamber 13. The fastening part 40 has a main body 41 in whose centre a through bore 411 is arranged. A latch 412 is arranged on each of the two opposite sides of the rear end of the main body 41 in such a way that the latch 412 extends from the said respective side. When the main body 41 of the fastening part 40 is put into the chamber 13 in such a way that the other end of the spring 30 abuts on the main body 41, the two latches 412 will be pushed into the two recesses 131 together. The latches 412 and the retaining portions 132 block each other, avoiding the fastening part 40 from releasing. An abutting piece 42 is arranged on the upper edge of the front end of the main body 41 in such a way that it protrudes from the chamber 13. An abutting surface 421 is formed on an end of the abutting piece 42. The said end differs from the end on which the main body 41 is arranged. The fitting unit 50 comprises a bolt 51 and a rear stopper 52. An end of the bolt 51 is enlarged in such a way that a collar 511 is formed. When the bolt 51 is inserted into the through bore 411 and the clearance hole 133 and combined with the rear stopper 52 on the rear side of the rear plate 11, the main body 41 of the fastening part 40 will be then blocked by the collar 511 and the rear stopper 52 and thus be absolutely confined in the chamber 13.

According to the invention, two fitting holes 12 are arranged on the rear plate 11.

According to the invention, at least one of the fitting holes 12 is elongated.

According to an embodiment the invention, a receptacle 15 for receiving the rear stopper 52 is arranged on the rear face side of the rear plate 11.

According to an embodiment the invention, the two recesses 131 are arranged on the upper side and the lower side of the chamber 13, at which the upper side and the lower side of the chamber 13 face each other. The two latches 412 are arranged on the upper side and the lower side of the main body 41, at which the upper side and the lower side of the main body 41 face each other.

According to an embodiment the invention, the abutting surface 421 is arched.

According to an embodiment the invention, the bolt 51 is a screw and the rear stopper 52 is a nut. The bolt 51 and the rear stopper 52 can be combined with each other in a screwing way.

According to an embodiment the invention, an indentation is formed on the front face side of the rear plate 11. A pad 60 is arranged in the indentation and provided with a through hole 61 which communicates with the fitting hole 12. A bolt is to be inserted into the through hole 61 and the fitting hole 12 and then be screwed on a bike frame.

According to an embodiment the invention, fixing pins 62 are arranged on the pad 60 and fixing holes 16 into which the fixing pins 62 are to be inserted are arranged in the indentation of the rear plate 11.

According to an embodiment the invention, the pad 60 is shock-absorbing.

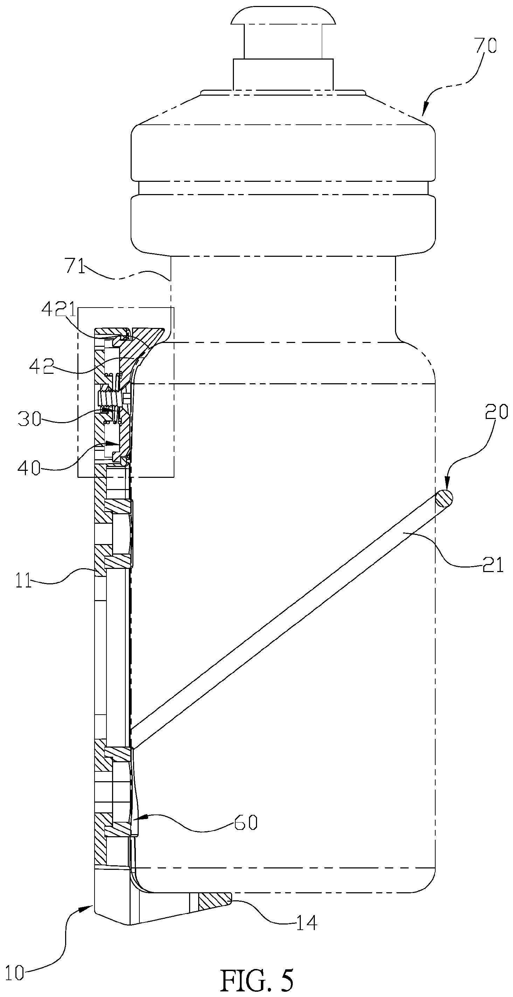

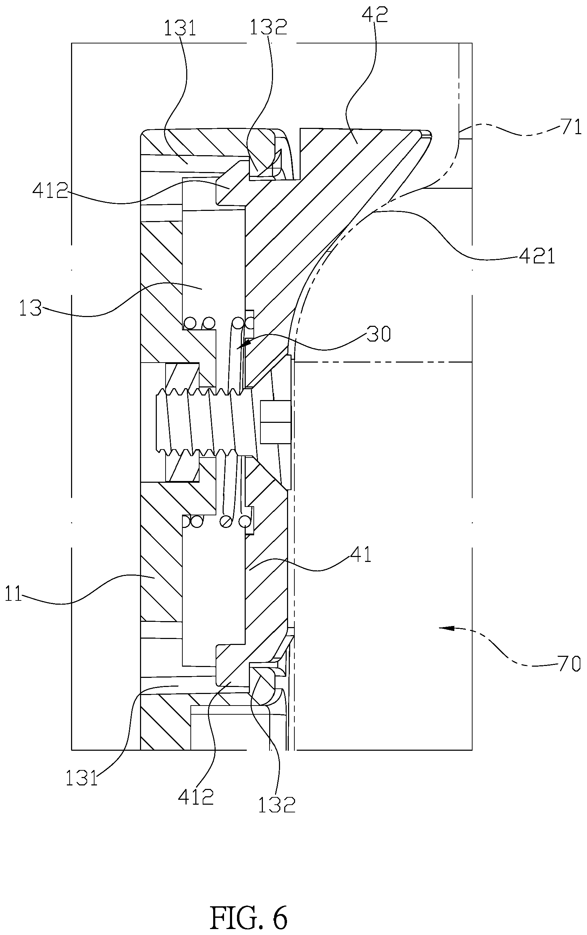

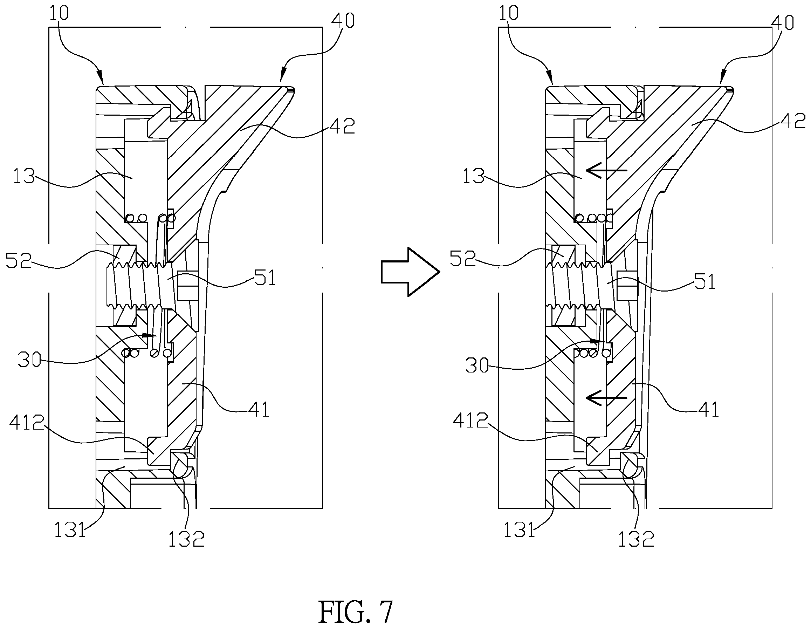

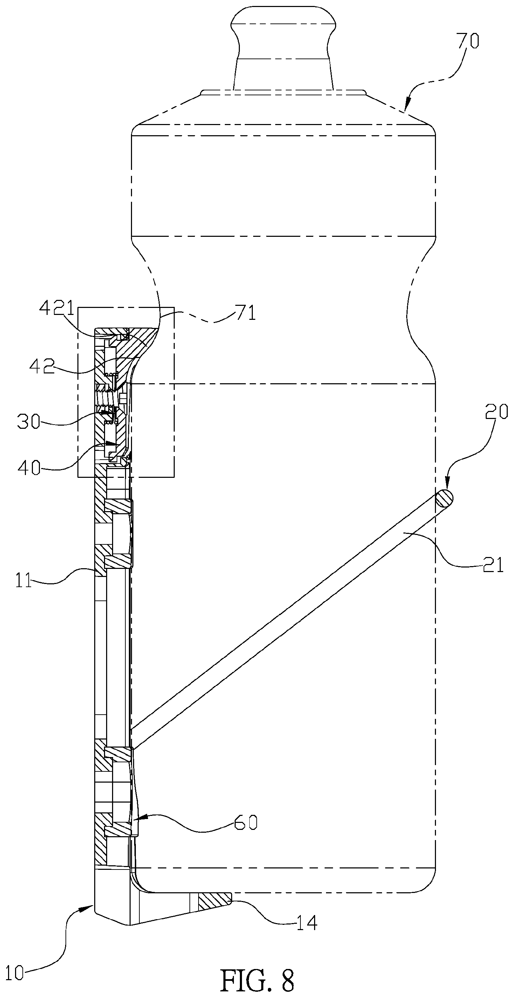

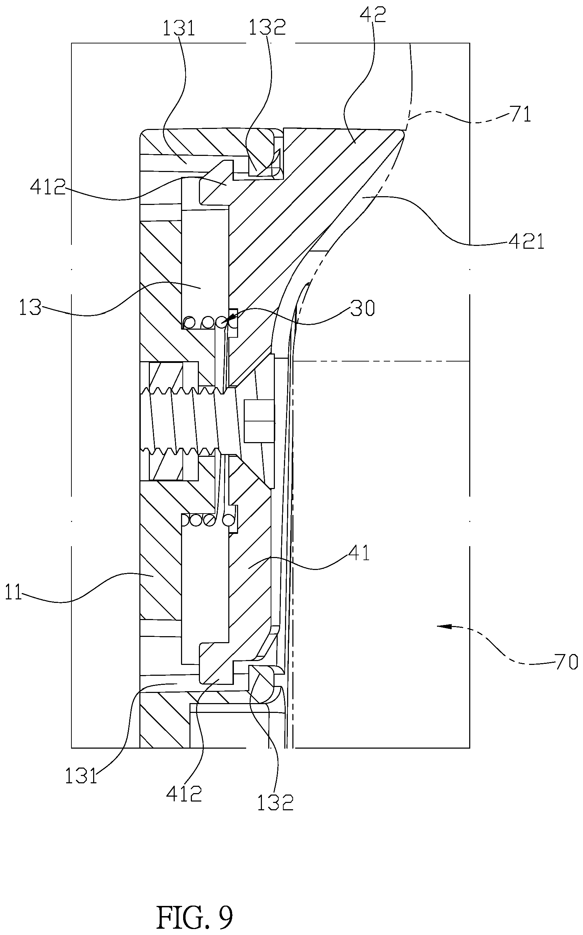

When putting the water bottle 70 in the bottle holder via the opening 21, the fastening part 40 will elastically protrude forward to fasten the neck 71 of the water bottle 70 (see FIG. 5 and FIG. 6). The fastening part 40 is designed and arranged in such a way that it can be pressed to protrude in the chamber 13 (see FIG. 7) and jut out again to be reset elastically. Thus, the bottle holder is adjustable according to the size of the water bottle 70 or the type and standard of the neck 71 and suitable for most of the water bottles 70 (see FIG. 8 and FIG. 9). Hence, it is not necessary to change the bottle holder even though the water bottle 70 is not usable anymore or lost.

According to the invention, the bike bottle holder is provided with a universal fastening structure which is adjustable according to the size of the bottle 70 or the type and standard of the neck 71. Thus, the bike bottle holder is suitable for a wider range of usage, which is economic, since it is not necessary to change the bottle holder even though the previous bottle is lost or not usable anymore. The neck 71 of the bottle 70 can be securely fastened by the abutting piece 42 in combination with the abutting surface 421. Thus, the bottle holder can be adjusted quickly simply by pressing the fastening part 40 and proves to be user-friendly.

Although the present invention has been explained in relation to its preferred embodiment, it is to be understood that many other possible modifications and variations can be made without departing from the scope of invention as hereinafter claimed.

## Claims

1. A bike bottle holder having a fastening structure, comprising a mount (10), a holding frame (20), a spring (30), a fastening part (40), and a fitting unit (50), wherein:
the mount (10) is provided with a rear plate (11) on which a through fitting hole (12) is arranged; wherein the mount (10) is to be screwed via the fitting hole (12) on a bicycle frame;
the rear plate (11) is combined with the holding frame (20), and an opening (21) is formed on the holding frame (20);
a chamber (13) is arranged in the front side of the rear plate (11);
a base (14) is arranged in such a way that it extends from the lower side of the rear plate (11);
a clearance hole (133) is arranged in the centre of the chamber (13) in such a way that it goes backwards through the chamber (13);
the fitting unit (50) is arranged in the clearance hole (133) in such a way that it goes through the clearance hole (133) and thus serves to block the fastening part (40), enabling a smooth insertion of the fastening part (40) into the chamber (13);
the spring (30) is arranged in the chamber (13) in such a way that an end of the spring (30) abuts on the inner wall area of the chamber (13);
the fastening part (40) has a main body (41);
the fitting unit (50) comprises a bolt (51);
an end of the bolt (51) being enlarged in such a way that a collar (511) is formed; **characterized in that**
the chamber (13) is arranged in the upper part of the front side of the rear plate (11); wherein a recess (131) is provided on each of the both opposite sides of the chamber (13) and formed in such a way that a retaining portion (132) is formed on the front end of the respective recess (131);
a through bore (411) is arranged in a centre of the main body (41) of the fastening part (40);
the fitting unit (50) further comprises a rear stopper (52);wherein, when the bolt (51) is inserted into the through bore (411) and the clearance hole (133) and combined with the rear stopper (52) on the rear side of the rear plate (11), the main body (41) of the fastening part (40) will be then blocked both by the collar (511) and the rear stopper (52) and thus be absolutely confined in the chamber (13);
a latch (412) is arranged on each of the two opposite sides of the rear end of the main body (41) in such a way that the latch (412) extends from the said respective side;
wherein, when the main body (41) of the fastening part (40) is put into the chamber (13) in such a way that the other end of the spring (30) abuts on the main body (41), the two latches (412) will be pushed into the two recesses (131) together;
the latches (412) and the retaining portions (132) block each other, avoiding the fastening part (40) from releasing;
wherein an abutting piece (42) is arranged on the upper edge of the front end of the main body (41) in such a way that it protrudes from the chamber (13);
an abutting surface (421) being formed on an end of the abutting piece (42),
wherein said end differs from the end on which the main body (41) is arranged; and
two said fitting holes (12) are arranged on the rear plate (11) and at least one of the fitting holes (12) is elongated.

2. The bike bottle holder as claimed in claim 1, wherein a receptacle (15) for receiving the rear stopper (52) is arranged on the rear face side of the rear plate (11).

3. The bike bottle holder as claimed in claim 1, wherein the two recesses (131) are arranged on the upper side and the lower side of the chamber (13) and the two latches (412) are arranged on the upper side and the lower side of the main body (41), at which the upper side and the lower side of the chamber (13) face each other and the upper side and the lower side of the main body (41) face each other.

4. The bike bottle holder as claimed in claim 1, wherein the bolt (51) is a screw and the rear stopper (52) is a nut, the bolt (51) and the rear stopper (52) being capable of being combined with each other in a screwing way.

5. The bike bottle holder as claimed in claim 1, wherein an indentation is formed on the front face side of the rear plate (11) and a pad (60) is arranged in the indentation and provided with a through hole (61) which communicates with the fitting hole (12).

6. The bike bottle holder as claimed in claim 5, wherein the fixing pins (62) are arranged on the pad (60) and fixing holes (16) into which the fixing pins (62) are to be inserted are arranged in the indentation of the rear plate (11).

7. The bike bottle holder as claimed in claim 5, wherein the pad (60) is shock-absorbing.

## Patentansprüche

1. Fahrradflaschenhalter mit einer Befestigungsstruktur, welcher eine Halterung (10), einen Halterahmen (20), eine Feder (30), ein Befestigungsteil (40), und eine Montageeinheit (50) umfasst, wobei:
die Halterung (10) mit einer Rückseitenplatte (11) versehen ist, an der ein durchgehendes Montageloch (12) angeordnet ist; wobei die Halterung (10) über das Montageloch (12) an einem Fahrradrahmen verschraubt wird;
die Rückseitenplatte (11) mit dem Halterahmen (20) kombiniert ist, und eine Öffnung (21) ist an dem Halterahmen (20) ausgebildet;
eine Kammer (13) in der Vorderseite der Rückseitenplatte (11) angeordnet ist;
eine Basis (14) so angeordnet ist, dass sie sich von der Unterseite der Rückseitenplatte (11) erstreckt;
ein Durchgangsloch (133) in der Mitte der Kammer (13) derart angeordnet ist, dass es rückwärts durch die Kammer (13) verläuft;
die Montageeinheit (50) in dem Durchgangsloch (133) derart angeordnet ist, dass sie durch das Durchgangsloch (133) hindurchgeht und somit dazu dient, das Befestigungsteil (40) zu blockieren, wodurch ein reibungsloses Einführen des Befestigungsteils (40) in die Kammer (13) ermöglicht wird;
die Feder (30) derart in der Kammer (13) angeordnet ist, dass ein Ende der Feder (30) an dem Innenwandbereich der Kammer (13) anliegt;
das Befestigungsteil (40) einen Hauptkörper (41) hat;
die Montageeinheit (50) einen Bolzen (51) umfasst;
ein Ende des Bolzens (51) derart erweitert ist, dass ein Kragen (511) ausgebildet ist;
**dadurch gekennzeichnet, dass**
die Kammer (13) im oberen Teil der Vorderseite der Rückseitenplatte (11) angeordnet ist; wobei eine Aussparung (131) an jeder der zwei gegenüberliegenden Seiten der Kammer (13) vorgesehen ist und derart ausgebildet ist, dass ein Halteabschnitt (132) an dem vorderen Ende der jeweiligen Aussparung (131) ausgebildet ist;
eine Durchgangsbohrung (411) in einer Mitte des Hauptkörpers (41) des Befestigungsteils (40) angeordnet ist;
die Montageeinheit (50) ferner einen hinteren Anschlag (52) umfasst; wobei,
wenn der Bolzen (51) in die Durchgangsbohrung (411) und das Durchgangsloch (133) eingesetzt ist und mit dem hinteren Anschlag (52) an der Rückseite der Rückseitenplatte (11) verbunden ist, der Hauptkörper (41) des Befestigungsteils (40) dann sowohl durch den Kragen (511) als auch durch den hinteren Anschlag (52) blockiert wird und somit vollständig in der Kammer (13) begrenzt wird;
eine Verriegelung (412) an jeder der zwei gegenüberliegenden Seiten des hinteren Endes des Hauptkörpers (41) derart angeordnet ist, dass die Verriegelung (412) sich von der jeweiligen Seite erstreckt;
wobei, wenn der Hauptkörper (41) des Befestigungsteils (40) derart in die Kammer (13) eingesetzt ist, dass das andere Ende der Feder (30) an dem Hauptkörper (41) anliegt, die beiden Verriegelungen (412) gemeinsam in die zwei Aussparungen (131) gedrückt werden;
die Verriegelungen (412) und die Halteabschnitte (132) sich gegenseitig blockieren, wodurch verhindert wird, dass sich das Befestigungsteil (40) löst;
wobei ein Anlagestück (42) an der oberen Kante des vorderen Endes des Hauptkörpers (41) derart angeordnet ist, dass es aus der Kammer (13) herausragt;
eine Anlagefläche (421) an einem Ende des Anlagestücks (42) ausgebildet ist, wobei dieses Ende von dem Ende, an dem der Hauptkörper (41) angeordnet ist, verschieden ist;
und
zwei der Montagelöcher (12) an der Rückseitenplatte (11) angeordnet sind und mindestens eines der Montagelöcher (12) länglich ist.

2. Fahrradflaschenhalter nach Anspruch 1, bei welchem eine Aufnahme (15) zur Aufnahme des hinteren Anschlags (52) an der hinteren Stirnseite der Rückseitenplatte (11) angeordnet ist.

3. Fahrradflaschenhalter nach Anspruch 1, bei welchem die beiden Aussparungen (131) an der Oberseite und der Unterseite der Kammer (13) angeordnet sind und die beiden Verriegelungen (412) an der Oberseite und der Unterseite des Hauptkörpers (41) angeordnet sind, an welchen die Oberseite und die Unterseite der Kammer (13) einander gegenüberstehen und die Oberseite und die Unterseite des Hauptkörpers (41) einander gegenüberstehen.

4. Fahrradflaschenhalter nach Anspruch 1, bei welchem der Bolzen (51) eine Schraube ist und der hintere Anschlag (52) eine Mutter ist, wobei der Bolzen (51) und der hintere Anschlag (52) mittels einer Verschraubung miteinander verbunden werden können.

5. Fahrradflaschenhalter nach Anspruch 1, bei welchem eine Vertiefung an der vorderen Stirnseite der Rückseitenplatte (11) ausgebildet ist und ein Polster (60) ist in der Vertiefung angeordnet und mit einem durchgehenden Loch (61) versehen, das mit dem Montageloch (12) in Verbindung steht.

6. Fahrradflaschenhalter nach Anspruch 5, bei welchem Befestigungsstifte (62) an dem Polster (60) angeordnet sind und Befestigungslöcher (16), in welche die Befestigungsstifte (62) eingesteckt werden sollen, sind in der Vertiefung der Rückseitenplatte (11) angeordnet.

7. Fahrradflaschenhalter nach Anspruch 5, bei welchem das Polster (60) stoßdämpfend ist.

## Revendications

1. Porte-bidon de vélo doté d'une structure de fixation, comprenant un support (10), un cadre de maintien (20), un ressort (30), une partie de fixation (40) et une unité de montage (50), dans lequel :
le support (10) est muni d'une plaque arrière (11) sur laquelle est agencé un trou traversant de montage (12) ; dans lequel le support (10) doit être vissé via le trou de montage (12) sur un cadre de vélo ;
la plaque arrière (11) est combinée avec le cadre de maintien (20), et une ouverture (21) est formée sur le cadre de maintien (20) ;
une chambre (13) est agencée sur la face avant de la plaque arrière (11) ;
une base (14) est agencée de manière à s'étendre à partir du côté inférieur de la plaque arrière (11) ;
un trou de dégagement (133) est agencé au centre de la chambre (13) de manière à traverser la chambre (13) à l'envers ;
l'unité de montage (50) est agencée dans le trou de dégagement (133) de manière à traverser le trou de dégagement (133) et sert ainsi à bloquer la partie de fixation (40), permettant une insertion en douceur de la partie de fixation (40) dans la chambre (13) ;
le ressort (30) est agencé dans la chambre (13) de telle sorte qu'une extrémité du ressort (30) bute contre la zone de paroi intérieure de la chambre (13) ;
la partie de fixation (40) présente un corps principal (41) ;
l'unité de montage (50) comprend un boulon (51) ;
une extrémité du boulon (51) étant élargie de manière à former un collier (511) ; **caractérisé en ce que**
la chambre (13) est agencée dans la partie supérieure de la face avant de la plaque arrière (11) ; dans lequel un évidement (131) est prévu sur chacun des deux côtés opposés de la chambre (13) et formé de telle sorte qu'une partie de retenue (132) soit formée à l'extrémité avant de l'évidement (131) respectif ;
un alésage traversant (411) est agencé au centre du corps principal (41) de la partie de fixation (40) ;
l'unité de montage (50) comprend en outre une butée arrière (52) ; dans lequel, lorsque le boulon (51) est inséré dans l'alésage traversant (411) et le trou de dégagement (133) et combiné avec la butée arrière (52) sur le côté arrière de la plaque arrière (11), le corps principal (41) de la partie de fixation (40) sera alors bloqué à la fois par le collier (511) et la butée arrière (52) et sera ainsi absolument confiné dans la chambre (13) ;
un loquet (412) est agencé sur chacun des deux côtés opposés de l'extrémité arrière du corps principal (41) de telle sorte que le loquet (412) s'étende à partir dudit côté respectif ;
dans lequel, lorsque le corps principal (41) de la partie de fixation (40) est placé dans la chambre (13) de telle sorte que l'autre extrémité du ressort (30) bute contre le corps principal (41), les deux loquets (412) seront poussés ensemble dans les deux évidements (131) ;
les loquets (412) et les parties de retenue (132) se bloquent mutuellement, empêchant la partie de fixation (40) de se libérer ;
dans lequel une pièce de butée (42) est agencée sur le bord supérieur de l'extrémité avant du corps principal (41) de manière à ce qu'elle dépasse de la chambre (13) ;
une surface de butée (421) étant formée sur une extrémité de la pièce de butée (42), ladite extrémité étant différente de l'extrémité sur laquelle le corps principal (41) est agencé ; et
deux dits trous de montage (12) sont agencés sur la plaque arrière (11) et au moins un des trous de montage (12) est allongé.

2. Porte-bidon de vélo selon la revendication 1, dans lequel un réceptacle (15) destiné à recevoir la butée arrière (52) est agencé sur la face arrière de la plaque arrière (11).

3. Porte-bidon de vélo selon la revendication 1, dans lequel les deux évidements (131) sont agencés sur le côté supérieur et le côté inférieur de la chambre (13) et les deux loquets (412) sont agencés sur le côté supérieur et le côté inférieur du corps principal (41), de sorte que le côté supérieur et le côté inférieur de la chambre (13) se fassent face et que le côté supérieur et le côté inférieur du corps principal (41) se fassent face.

4. Porte-bidon de vélo selon la revendication 1, dans lequel le boulon (51) est une vis et la butée arrière (52) est un écrou, le boulon (51) et la butée arrière (52) pouvant être combinés l'un avec l'autre de manière vissée.

5. Porte-bidon de vélo selon la revendication 1, dans lequel une indentation est formée sur la face avant de la plaque arrière (11) et un coussinet (60) est agencé dans l'indentation et muni d'un trou traversant (61) qui communique avec le trou de montage (12).

6. Porte-bidon de vélo selon la revendication 5, dans lequel les broches de fixation (62) sont agencées sur le coussinet (60) et des trous de fixation (16) dans lesquels les broches de fixation (62) doivent être insérées sont agencés dans l'indentation de la plaque arrière (11).

7. Porte-bidon de vélo selon la revendication 5, dans lequel le coussinet (60) est amortisseur.
